# EUROPÄISCHE PATENTSCHRIFT

(11) **EP 0 490 097 B1**
(45) Veröffentlichungstag und Bekanntmachung des Hinweises auf die Patenterteilung: **26.03.1997**
(21) Anmeldenummer: 91119234.2
(22) Anmeldetag: 12.11.1991
(51) Int. Cl.: G01N 21/88, G01N 33/34

(54) **Verfahren zur Untersuchung von bahnförmigem, durchscheinendem Material, insbesondere fotografischen Papierträgern**
Process for investigating transparent webs, especially photographic paper supports
Procédé d'analyse de bandes en matériau transparent, notamment supports photographiques en papier

(30) Priorität: 08.12.1990 DE 4039196
(43) Veröffentlichungstag der Anmeldung: 17.06.1992
(73) Patentinhaber: FELIX SCHOELLER JR. GMBH & CO. KG, D-49086 Osnabrück (DE)
(72) Erfinder: Kerkhoff, Alois Bernhard, Dr., W-4516 Bissendorf 2 (DE); Storbeck, Wolfgang, W-4516 Bissendorf 2 (DE)
(74) Vertreter: Hoffmeister, Helmut, Dr. Dipl.-Phys.

(56) Entgegenhaltungen:
- EP-A- 0 024 586
- US-A- 4 931 657
- Week 8429, Derwent Publications Ltd., London, GB; AN 84-178328 & EP-A-113 691 (LBP PARTNERSHIP) 18 Juli 1984
- Week 8327, Derwent Publications Ltd., London, GB; AN 83-705705 & US-A-4 389 669 (D. EPSTEIN ET AL) 21 Juni 1983

## Beschreibung

Die Erfindung betrifft ein Verfahren zur visuellen Kontrolle der Formation von bahnförmigem, sich relativ zur Vorrichtung bewegendem, durchscheinendem Material.

Ein solches Verfahren ist bekannt aus der US-PS 4 857 747. Die genannte Patentschrift beschreibt Verfahren und Vorrichtung zur On-Line-Untersuchung von bahnförmigem Material zur Ermittlung der sogenannten Formation. Die Vorrichtung arbeitet mit einer quer zur Bahn liegenden Lichtquelle und einer CCD-Kamera, mit der ein digitalisierbares Signal aufgefangen werden kann. Durch entsprechende Schaltkreise wird das digitalisierte Signal Pixel für Pixel normiert und untersucht, wobei ein "Formationsindex" generiert wird für die gesamte Breite des Gewebes.

Das bekannte Verfahren erfordert einen relativ hohen Aufwand an Computer- und Speicherkapazität. Es zeigt sich, daß trotz des hohen Aufwandes es schwierig ist, ein für eine wiederholbare Aussage ausreichendes Signal-Rausch-Verhältnis zu erzeugen. Insbesondere Papier ist ein Naturprodukt, dessen Eigenschaften, die unter dem Gesamtbegriff "Formation" zusammengefaßt werden sollen, sich dem Fachmann bei Durchsicht der Papierbahn erschließen; es ist jedoch äußerst schwierig, Indexzahlen allein auf der Basis der Informationen zu gewinnen, die sich aus den einzelnen Bildpunkten (Pixeln) ablesen lassen.

Die Abtastgeschwindigkeit bei dem Verfahren gemäß Stand der Technik ist dadurch begrenzt, daß die Verarbeitungsgeschwindigkeit der optischen und datenverarbeitenden Systeme begrenzt ist. Das Überwachungssystem überwacht im gleichen Zeitpunkt die gesamte Breite mit einer 2048-Pixel-pro-Zeile-Kamera. Die Scan-Rate beträgt etwa 5000 pro Sekunde, was einer Belichtungszeit von 200 µsec pro Scandurchlauf entspricht. Bei einer Bahngeschwindigkeit von 10 m/sec würde dies einem Vorschub von 2 mm entsprechen. Dies führt bei Papier und Karton zu erheblichen Bewegungsunschärfen, die insbesondere bei fotografischen Basispapieren zu Fehlbeurteilungen bezüglich des sogenannten mottle (s.u.) führen.

Demnach ist das in der US-PS beschriebene Verfahren nur für "normale" Papiere geeignet, womit Papiere eines Flächengewichtes zwischen 50 bis 120 g/m² verstanden werden. Dagegen ist eine derartige Belichtungszeit bei Strukturuntersuchungen an Halbkartons (Flächengewicht 120 - 190 g/m²) und Kartons (Flächengewicht von 190 -300 g/m²) zu groß, so daß es zu Bewegungsunschärfen kommt.

Gerade bei Halbkartons und Kartons ist eine relativ gleichmäßige Formation gegeben, die Abweichungen von einer Norm nur schwer erkennen lassen. Die Unterschiede in der Faserverteilung sind demnach schwieriger zu beurteilen. Insbesondere bei fotografischen Basispapieren besteht ein Zusammenhang zwischen der Faserverteilung der Papierunterlage und dem sogenannten "mottle" des später entwickelten fotografischen Bildes. Unter "mottle" werden Schwankungen der optischen Dichte im fotografischen Bild bezeichnet. Bestimmend für dies unerwünschte Phänomen ist die Oberfläche des Trägermaterials. Unebene Oberflächen führen selbst bei absolut gleichmäßigem Schichtauftrag zu Fließerscheinungen in der Schicht, die im fertigen Bild als "mottle", d. h. Schwankungen der optischen Dichte, sichtbar werden. Die Unebenheit eines Papiers ist in starkem Maße von der Faserstruktur des Zellstoffs und von der Bildung von Zellstoff-Flocken während der Blattbildung bestimmt. Dies wirkt sich selbst bei starker Satinage der Rohpapiere bis zu den beschichteten Papieren aus.

Eine solche Untersuchung ist durch das bekannte Verfahren nicht gewährleistet.

Die EP-A-24 586 offenbart ein Verfahren zur visuellen Fehlerkontrolle von laufenden Papierbahnen, bei dem zunächst mit einem separaten optischen Sensor Fehler in der Papierbahn detektiert werden. Von den fehlerhaften Bahnausschnitten wird dann mit Hilfe eines Blitzlichts und einer Kamera ein eingefrorenes Bild aufgenommen und auf einem Monitor visuell geprüft. Die Belichtungszeit ist dabei so kurz, daß trotz Bahnbewegung ein scharfes Bild entsteht.

Die US-A-4 931 657 offenbart ein Verfahren zum Testen der Formation von laufenden Papierbahnen, bei dem in bestimmten Abständen mit Hilfe eines Blitzlichts und einer Kamera ein eingefrorenes Bild eines Bahnausschnitts aufgenommen wird. Die Belichtungszeit ist dabei ebenfalls so kurz, daß trotz Bahnbewegung ein scharfes Bild entsteht. Ein Computer wertet das Bild aus und gibt ein Maß für die Qualität der Formation aus.

Es sei darauf hingewiesen, daß die Papier-Formation typischerweise aufgrund einer Papier-Durchsicht ermittelt wird. Diese Art der Analyse bleibt mit einer gewissen Subjektivität behaftet; es zeigt sich jedoch, daß das menschliche Auge und die menschliche Erfahrung für die Analyse und Fehlerbestimmung in Bezug auf die Papierformation immer noch bessere Ergebnisse liefern als noch so ausgeklügelte Computer-Programme. Es wird hierzu verwiesen auf den Artikel "Characterization of Paper-Formation", Part 1, Verfasser: Cresson, T.M., Tomimasu, H. und Luner, P., erschienen im "Tappi"-Journal, July 1990, Seite 153 ff.

Es stellt sich demnach die Aufgabe, eine Vorrichtung der eingangs genannten Art anzugeben, die es ermöglicht, möglichst ermüdungsfrei und der physischen und psychischen Fähigkeit eines menschlichen Betrachters entgegenkommend zu arbeiten, so daß eine für die Foto industrie ausreichende Analyse der Bahn-Formation möglich ist.

Diese Aufgabe wird gelöst mit einem Verfahren gemäß Anspruch 1.

Wesentlich zur Durchführung des Verfahrens ist eine mit einer Blitzlampe gekoppelte Kamera, wobei die Blitzlampe oberhalb und die Kamera unterhalb der Bahn angeordnet ist. Diese Zuordnung ist allerdings nicht zwingend, da eine Umkehrung oder eine auf gleicher Höhe liegende Anordnung von Blitzlampe und Kamera mit vertikal laufender Bahn ebenfalls möglich scheinen. Die Kamera/Belichtungsanordnung ist vorzugsweise parallel gegenüber der Bahn bewegbar, wobei jeweils ein willkürlich gewählter Ausschnitt der Bahn erfaßt wird, etwa in der Größe 5 cm x 5 cm bis 20 cm x 20 cm, jedoch auch ein größeres Bild.

Bahngeschwindigkeit und Belichtungszeit müssen so aufeinander abgestimmt sein, daß die Belichtungsunschärfe vernachlässigbar ist, wobei sich als annehmbarer Wert ein Bahnvorschub von kleiner/ gleich 0,5 mm während der Belichtungszeit t₁ herausgestellt hat. Die Blitzdauer sollte unter 100 µsec, vorzugsweise zwischen 10 und 40 µsec. liegen.

Demnach erhält man ein "eingefrorenes" Bild eines bestimmten Bahnausschnittes, das vorzugsweise von einer CCD-Kamera (charged coupled device) aufgenommen ist und das bereits eine leicht zu digitalisierende Pixel-Matrix besitzt. Das das Bild enthaltende Video-Signal wird von der Kamera auf einen Bildschirm übertragen, wobei diesem gewonnenen Bild ein Vergleichsbild visuell zugeordnet ist. Das heißt, daß entweder auf zwei nebeneinanderliegenden Monitoren das eine und das andere Bild nebeneinander erscheinen oder aber der Bildschirm geteilt wird und die beiden Bilder nebeneinander oder übereinander erscheinen. Es ist auch möglich, die beiden Bilder aufeinander zu projizieren, wenn dies für den Vergleich bessere Möglichkeiten bietet. Jedenfalls sollen alle diese Möglichkeiten durch den Ausdruck "visuell zuordnungsbar" erfaßt sein. Das Vergleichsbild wird anhand einer Muster-Vorlage (Papier, Halbkarton oder Karton) erstellt und gibt ein Bild einer guten Formation wieder.

Der Vergleich der beiden Bilder anhand eines "eingefrorenen Bildes" erlaubt eine sichere Beurteilung der Papier- bzw. Karton-Qualität, da das eingefrorene Bild eine äußerst geringe Bildunschärfe aufweist, die jedenfalls so klein ist, daß Faser-Anordnungen, Verteilungen und dergleichen sehr genau visuell ausgemacht werden können. Das Verfahren kann demnach auch für einen breiten Bereich der Flächengewichte kontinuierlich verwendet werden, wobei Flächengewichte zwischen 50 und 300 g/m² liegen können.

Pausen zwischen den Aufnahmen sind so lang, daß der Betrachter in Ruhe die beiden Bilder nebeneinander betrachten kann, also beispielsweise alle 60 sec eine Aufnahme.

Wie an sich bekannt, können dem Objektiv der Kamera Filter, und zwar z. B. Polarisations- und/oder Farbfilter, Graufilter oder andere optische Geräte vorgeschaltet werden. CCD-Kameras sind käuflich erhältlich und bilden nicht für sich einen Teil der Erfindung. Es soll auch nicht ausgeschlossen werden, daß anstelle einer CCD-Kamera eine übliche Vidikon-Kamera, wie sie zur Erzeugung von Video-Signalen bekannt ist, verwendet wird. Es muß lediglich eine ausreichende Auflösung und Lichtempfindlichkeit gegeben sein, um ein brauchbares Bild zu erzielen.

Wesentlich ist ferner, daß das Videobild der Kamera nicht nur direkt einem Monitor zuzuleiten ist, sondern noch über ein Datenverarbeitungsgerät geführt werden kann. Das Signal kann in diesem Gerät in Bezug auf Farb- und/oder Graustufen digitalisiert werden, gegebenenfalls bezüglich seines digitalisierten Signalinhaltes über elektrische Filterkreise verändert werden und in der veränderten Form dem Monitor-Gerät zugeführt werden. Es lassen sich hierdurch beispielsweise Falschfarben-Bilder erzeugen, die bestimmte Eigenschaften stärker hervorheben und die die visuelle Analyse erleichtern. Das Datenverarbeitungsgerät enthält vorzugsweise auch digitale Bildspeicher, so daß ein früher erzeugtes Bild erneut abrufbar ist.

Einzelheiten des Aufbaues zeigt schematisch die Zeichnung, anhand derer das Verfahren erläutert wird.

Eine zur Durchführung des Verfahrens geeignete Vorrichtung ist im Bereich einer sich bewegenden Papierbahn 1 angeordnet. Über Umlenk- und Antriebsrollen 2 bzw. 3a/3b wird die Papierbahn 1 in Richtung des Pfeiles in Richtung des Pfeiles P gefördert, und zwar mit einer Vorschubgeschwindigkeit in der Größenordnung 2 bis 10 m/sec. Das Papier hat ein Flächengewicht etwa zwischen 70 bis 250 g/m².

In einem Abstand von etwa 1 cm sind sogenannte Spiegelschächte 4 oberhalb der Bahn 1 angeordnet. Im Kopf der Spiegelschächte 4 befinden sich Xenon-Blitzlampen 5, die mit Hilfe eines Reflektors 6 ihr Licht gebündelt mit hoher Energie nach unten werfen. Über eine Milchglas-Diffusorscheibe 7 wird das Licht gestreut auf und durch die Papierbahn 1 gestrahlt. Andere Blitzlampen sind beispielsweise mit LED-Dioden, Laser-Dioden oder speziellen Impuls-Lichtquellen zu verwirklichen.

Der auf die Papierbahn fallende Lichtstrom ist entsprechend der gewünschten Farbe und Intensität einstellbar, die Zeit der Auslösung der Blitzlampen mit einer Kamera 10 (siehe unten) synchronisiert. Die Blitzlampen, von denen nur eine dargestellt sind, können auch stroboskop- oder kaskadenartig hintereinander geschaltet werden.

Gegenüberliegend, d. h. auf der unteren Seite der Papierbahn, ist eine lichtweglenkende Vorrichtung, hier Spiegelkasten 9, vorgesehen, der mit einem Spiegel 9' versehen ist, der das ankommende Licht durch das Objektiv 11 der Kamera 10 auf die lichtempfindliche CCD-Matrix 12 lenkt. Die Kamera 10 ist demnach vor Kopf des Spiegelkastens 9 angeordnet und kann dort leicht abgenommen werden. Der Kamera 10 können Filter 20, z.B. Polarisations- oder Farbfilter, vorgeschaltet werden.

Die CCD-Matrix 12 erzeugt in an sich bekannter Weise ein Videosignal, das über eine Leitung 13 einem Datenverarbeitungsgerät 14 zuführbar ist, in dem das Signal in Bezug auf Farb- und/oder Graustufen oder andere Informationen digitalisierbar ist. In der Datenverarbeitungsvorrichtung 14 befinden sich weiterhin elektronische Filterkreise, mit denen das digitalisierte Signal veränderbar ist. Zusätzlich können noch elektronische Speichereinheiten vorgesehen werden, so daß der digitalisierte Inhalt des Videosignales jederzeit abrufbar zu speichern ist. Derartige Techniken sind für die Videoverarbeitung bekannt und brauchen hier nicht mehr erläutert zu werden.

Die CCD-Kamera 10 besitzt eine vertikal und horizontal auflösende Pixel-Matrix, beispielsweise mit einer Auflösung horizontal 378 Pixel-Punkte und vertikal 485 Pixel-Punkte im sogenannten 2 : 1 "Interlaced Mode".

Die Blitzdauer beträgt weniger als 100 µsec, vorzugsweise 10 bis 40 µsec, so daß bei einer kontinuierlichen Bahngeschwindigkeit in der Größenordnung 5 bis 10 m/sec. Aufnahmen möglich sind, ohne daß eine Bewegungsunschärfe die Aufnahme wesentlich beeinflußt, da der Vorschub der Bahn unterhalb von 0,5 mm während der Blitzdauer liegt.

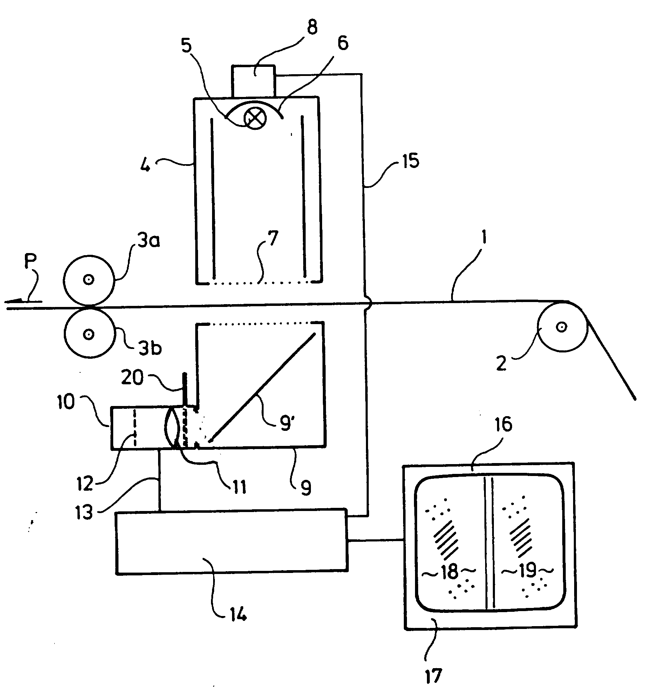

Die Steuerung des Blitzes erfolgt über die Leitung 15, sowie mit Hilfe von Ladungsspeicher- und Auslösevorrichtungen 8. Das gegebenenfalls verarbeitete Video-Signal wird einem Monitor 16 mit Bildschirm 17 in üblicher Zeilenablenktechnik zugeordnet. Im vorliegenden Falle ist auf dem Bildschirm auf der linken Hälfte das gewonnene Bild 18 und auf der rechten Bildschirmhälfte das Vergleichbild 19 vorgesehen. Der Beobachter kann demnach beide Bilde unmittelbar nebeneinanderliegend vergleichen. Die beiden Bilden ruhen solange, bis der trachter ausreichende Informationen erfahren und gegebenenfalls durch Sprache auf ein Bandgerät gespeichert hat. Erst dann erfolgt automatisch oder durch entsprechende Auslösung eine neue Aufnahme an anderer Stelle der Bahn.

Es hat sich gezeigt, daß diese Art der Analyse brauchbarere Ergebnisse liefert als eine Scanning-Methode gemäß dem Stand der Technik. Die Zeitspanne zwischen zwei Aufnahmen liegt etwa zwischen einer bis fünf Minuten. Die Vorrichtung kann quer zur Bahn beweglich sein und einen willkürlich herausgegriffenen Ausschnitt festhalten.

## Patentansprüche

1. Verfahren zur visuellen Kontrolle der Formation von einer in einer Richtung bewegten Bahn aus fotografischem Basispapier oder Basiskarton, mit den Verfahrensschritten:
- Durchstrahlen der bewegten Bahn aus fotografischem Basis papier oder Basis Karton (1) mit Lichtblitzen einer vorgegebenen Farbe und Intensität, deren Dauer derart bemessen ist, daß während der Durchstrahlung der Bahn deren Bewegung keine Bildunschärfe erzeugt, wobei die zeitlichen Abstände der Lichtblitze so gewählt sind, daß eingefrorene, einzeln betrachtbare Bilder eines bestimmten Bahnausschnitts erhalten werden,
- Erfassen des durch die Bahn (1) hindurchgegangenen Lichtstroms mit einer Videokamera (10) und Umwandlung in ein Video-Signal,
- Wiedergabe des Video-Signals auf dem Bildschirm (17) eines Video-Monitor-Geräts als sichtbares Bild (18), dem ein Vergleichsbild (19) zugeordnet wird,
- Kontrolle der Formation durch visuellen Vergleich beider Bilder (18,19).

2. Verfahren nach Anspruch 1, dadurch gekennzeichnet, daß das Vergleichsbild (19) und das von der Videokamera (10) kommende Bild nebeneinanderliegend auf demselben Bildschirm erzeugt werden.

3. Verfahren nach Anspruch 1 oder 2, dadurch gekennzeichnet, daß der zu der Kamera gelangende Lichtstrom polarisations- oder farbgefiltert wird.

4. Verfahren nach wenigstens einem der vorhergehenden Ansprüche, dadurch gekennzeichnet, daß das Video-Signal einem Datenverarbeitungsgerät (14) zugeführt wird, in dem es in bezug auf Farb- und/oder Graustufen digitalisiert wird, oder bezüglich der digitalisierten Signale über elektrische Filterkreise verändert und verändert auf dem Bildschirm (17) dargestellt wird.

## Claims

1. A method of visually checking the formation of a web of photographic base paper or base cardboard moving in one direction, the steps of the method being as follows:
- irradiation of the moving web of photographic base paper or base cardboard (1) by light flashes of a preset colour and intensity and having a duration such that during irradiation, the motion of the web does not result in any unsharpness in the image, the intervals between flashes being so chosen that frozen individually observable images of a particular portion of web are obtained,
- detection of the light flux through the web (1) by a video camera (10) and conversion into a video signal,
- reproduction of the video signal on the screen (17) of a video monitor in the form of a visible image (18), which is associated with an image (19) for comparison, and
- monitoring of the formation by a visual comparison of the two images (18, 19).

2. A method according to claim 1, characterised in that the image (19) for comparison and the image coming from the video camera (10) are generated side by side on the same screen.

3. A method according to claim 1 or 2, characterised in that the light flux reaching the camera is polarisation-filtered or colour-filtered.

4. A method according to at least one of the preceding claims, characterised in that the video signal is fed to a data-processing device (14) in which it is digitised with respect to colour and/or grey stages or altered with respect to the digitised signals via electric filter circuits, and the altered signal is shown on the screen (17).

## Revendications

1. Procédé de contrôle visuel de l'épair d'une bande déplacée dans une direction et formée d'un support photographique en papier ou en carton, comportant les étapes opératoires suivantes :
- exposition de la bande (1) déplacée et formée d'un support photographique en papier ou en carton à des flashes ayant une couleur et une intensité prédéterminées et dont la durée est calculée de telle manière que pendant l'exposition de la bande, le déplacement de cette dernière ne produise pas de flou, les intervalles entre les flashes étant choisis de manière à obtenir des vues gelées, pouvant être examinées individuellement, d'une partie de bande déterminée,
- détection à l'aide d'une caméra vidéo (10) du flux lumineux qui a traversé la bande (1) et conversion en un signal vidéo,
- restitution du signal vidéo sur l'écran (17) d'un moniteur vidéo sous forme d'image (18) visible à laquelle est associée une image de comparaison (19),
- contrôle de l'épair par comparaison visuelle des deux images (18, 19).

2. Procédé selon la revendication 1, caractérisé en ce que l'image de comparaison (19) et l'image provenant de la caméra vidéo (10) sont produites côte à côte sur le même écran.

3. Procédé selon la revendication 1 ou 2, caractérisé en ce que le flux lumineux arrivant à la caméra est filtré par des filtres de polarisation ou des filtres colorés.

4. Procédé selon au moins l'une des revendications précédentes, caractérisé en ce que le signal vidéo est transmis à un appareil de traitement de données (14) dans lequel il est numérisé en ce qui concerne des nuances de couleurs et/ou des niveaux de gris ou est modifié en ce qui concerne les signaux numérisés par l'intermédiaire de circuits électriques filtrants et est représenté dans sa forme modifiée sur l'écran (17).
